# DEMANDE DE BREVET EUROPEEN

(11) **EP 3 037 256 A1**
(43) Date de publication de la demande: **29.06.2016**
(21) Numéro de dépôt: 15199931.5
(22) Date de dépôt: 14.12.2015
(51) Int. Cl.: B32B 5/02, B32B 5/14, B32B 5/24, B32B 5/26, B32B 5/28, B32B 7/12, B32B 3/08, B32B 3/28, B32B 3/30, B32B 5/12

(54) **PROCÉDÉ DE RÉALISATION D'UN PANNEAU D'HABILLAGE INTÉRIEUR DE VÉHICULE AUTOMOBILE**

(30) Priorité: 22.12.2014 FR 1463161; 23.04.2015 FR 1553679
(71) Demandeur: Cera APS, 51100 Reims (FR)
(72) Inventeur: La désignation de l'inventeur n'a pas encore été déposée
(74) Mandataire: Sayettat, Julien Christian

(57) **Abrégé**

L'invention concerne un procédé comprenant les étapes suivantes : prévoir un moule comprenant une face chauffée et une face refroidie ; superposer dans ledit moule un multicouche comprenant successivement : une couche de revêtement d'endroit (7) tournée vers ladite face refroidie, une couche structurelle (5) comprenant des fibres liées entre elles par un liant thermoplastique, une couche de mousse et une couche de revêtement d'envers (8) tournée vers ladite face chauffée ; mouler ledit multicouche en le comprimant entre lesdites faces de sorte que l'épaisseur de ladite âme en ladite partie périphérique après démoulage soit essentiellement constituée par l'épaisseur de ladite couche structurelle ; réaliser une découpe périphérique, ladite découpe étant réalisée de sorte que lesdites couches de revêtement se rejoignent bord à bord selon une ligne de jonction (10), de manière à masquer la tranche (11) de ladite âme, lesdites couches de revêtement étant tranchées au raz de ladite tranche et de ladite ligne, de manière à obtenir ledit panneau.

## Description

L'invention concerne un procédé de réalisation d'un panneau d'habillage intérieur de véhicule automobile - par exemple sous forme de tablette de recouvrement d'un compartiment à bagages, de faux-plancher ou de panneau de protection acoustique pour un moteur - et un panneau réalisé par un tel procédé.

Il est connu, notamment du document FR-2 608 964, de mettre en oeuvre un procédé de réalisation d'un panneau d'habillage intérieur de véhicule automobile, ledit procédé comprenant les étapes suivantes :
- prévoir un moule définissant une première cavité de moulage, ledit moule étant pourvu d'un premier dispositif de chauffage, ledit moule étant en outre pourvu d'au moins un élément de cadre périphérique saillant vers ladite cavité, ledit élément étant pourvu d'un deuxième dispositif de chauffage,
- disposer successivement dans ledit moule une couche de revêtement d'endroit et une couche structurelle à base de fibres mélangées à un liant thermodurcissable, ledit moule étant chauffé à température de réticulation dudit liant, par exemple de l'ordre de 250°C,
- fermer ledit moule de manière à réaliser un moulage par compression de ladite couche structurelle pour la conformer sensiblement à la géométrie de ladite première cavité, ladite couche étant surcomprimée par ledit cadre en sa périphérie,
- ouvrir ledit moule et recouvrir successivement ladite couche structurelle d'une couche de colle activable à chaud à température plus faible que la température de réticulation dudit liant, d'une couche de mousse à base de polyuréthanne et d'une couche de revêtement d'envers,
- baisser la température dudit moule pour le porter à température d'activation de ladite colle, par exemple de l'ordre de 120°C, et porter ledit cadre à température permettant une fusion de ladite mousse, par exemple de l'ordre de 250°C,
- refermer ledit moule de manière à définir une deuxième cavité de moulage ménageant un espace de logement de ladite couche de mousse, ledit cadre réalisant une compression périphérique de ladite couche de mousse pour lui conférer une épaisseur résiduelle telle que l'épaisseur du bicouche couche structurelle / couche de mousse, formant l'âme dudit panneau, soit essentiellement constituée après démoulage par l'épaisseur de ladite couche structurelle,
- réaliser une découpe périphérique, notamment concomitamment avec la compression, ladite découpe étant réalisée de sorte que lesdites couches de revêtement se rejoignent bord à bord selon une ligne de jonction, de manière à masquer la tranche de ladite âme, lesdites couches de revêtement étant tranchées au raz de ladite tranche et de ladite ligne, de manière à obtenir ledit panneau.

La couche structurelle forme la structure de l'âme, afin qu'elle soit autoportante.

Quant à la couche de mousse, elle est notamment destinée à réaliser une protection acoustique par absorption des ondes sonores.

Le procédé sus-décrit permet que les couches de revêtement se rejoignent bord à bord selon une ligne de jonction, de manière à masquer la tranche de l'âme, lesdites couches de revêtement étant tranchées au raz de ladite tranche et de ladite ligne, ce qui permet de bénéficier d'une finition périphérique satisfaisante et simple à réaliser, évitant notamment de prévoir une bavette périphérique saillante souple formée par la superposition des couches de revêtement d'endroit et d'envers, ladite bavette étant repliée vers la couche de revêtement d'envers et soudée ou collée pour pouvoir être maintenue en place.

Cependant, le procédé sus-décrit présente plusieurs inconvénients :
- il comporte deux étapes de moulage par compression, à savoir celle de conformation de la couche structurelle puis celle de conformation de la couche de mousse, ce qui a un impact défavorable sur le temps de cycle de fabrication, avec les surcoûts qui en résultent ; des processus en une seule étape de moulage ont été proposés dans d'autres documents de l'état de la technique - prévoyant de mouler toutes les couches à la fois - mais il s'avère que, aux températures élevées requises pour réticuler un liant thermodurcissable, la mousse est uniformément écrasée et ne peut plus jouer son rôle d'absorption acoustique et/ou de confort tactile,
- il requiert une baisse de la température du moule entre les deux étapes de moulage, suivie par une hausse de température lorsque l'on passe à la fabrication du panneau suivant, ce qui peut se répercuter sur le temps cycle,
- la température nécessaire à la réticulation du liant est très élevée, par exemple de l'ordre de 250°C, ce qui entraîne une grande consommation d'énergie.

L'invention a pour but de pallier ces inconvénients en proposant un procédé permettant d'obtenir en une seule étape de moulage par compression un panneau présentant de bonnes propriétés de protection acoustique, de fabrication simplifiée et pourvu d'une finition périphérique ne requérant pas la formation d'une bavette souple.

A cet effet et selon un premier aspect, l'invention propose un procédé de réalisation d'un panneau d'habillage intérieur de véhicule automobile - par exemple sous forme de tablette de recouvrement d'un compartiment à bagages, de faux-plancher ou de panneau de protection acoustique pour un moteur -, ledit procédé comprenant les étapes suivantes :
- prévoir un moule définissant une cavité de moulage comprenant une face chauffée et une face refroidie,
- superposer dans ledit moule un multicouche comprenant successivement :
   o une couche de revêtement d'endroit, ladite couche étant tournée vers ladite face refroidie,
   o une couche structurelle comprenant des fibres liées entre elles par un liant thermoplastique, ladite couche ayant été préalablement portée à température de fusion dudit liant,
   o une couche de mousse à base de polyuréthanne,
   o et une couche de revêtement d'envers, ladite couche étant tournée vers ladite face chauffée,
de sorte que ledit multicouche présente une âme comprenant ladite couche structurelle et ladite couche de mousse, ladite âme présentant une partie centrale et une partie périphérique,
- mouler ledit multicouche en le comprimant entre lesdites faces, lesdites faces étant conformées de sorte que ledit multicouche soit fortement comprimée en ladite partie périphérique, la température de ladite face chauffée étant définie de sorte que ladite couche de mousse s'écrase, sous l'effet combiné de la pression appliquée et de la chaleur apportée par ladite face chauffée, pour présenter une épaisseur résiduelle stable après démoulage, ladite épaisseur étant inférieure ou égale à 0,5 mm, de sorte que l'épaisseur de ladite âme en ladite partie périphérique après démoulage soit essentiellement constituée par l'épaisseur de ladite couche structurelle,
- réaliser une découpe périphérique, notamment concomitamment avec la compression, ladite découpe étant réalisée de sorte que lesdites couches de revêtement se rejoignent bord à bord selon une ligne de jonction, de manière à masquer la tranche de ladite âme, lesdites couches de revêtement étant tranchées au raz de ladite tranche et de ladite ligne, de manière à obtenir ledit panneau.

Le fait de disposer d'un moule présentant une face chauffée et une face refroidie permet d'une part de réaliser, sous l'effet combiné de la pression appliquée et de la chaleur apportée par ladite face chauffée, une compression stable de la couche de mousse en partie périphérique et d'autre part de refroidir la couche structurelle une fois conformée par ledit moule.

On précise ici que les mesures d'épaisseur, que ce soit sur la couche de mousse ou sur la couche structurelle, sont réalisées sur le panneau à l'état libre, c'est à dire en l'absence de toute contrainte en compression.

Avec l'agencement proposé :
- on met en oeuvre une seule étape de moulage par compression, ce qui a un impact favorable sur le temps de cycle de fabrication, avec les économies qui en résultent, et ceci sans écrasement uniforme de la mousse qui peut pleinement jouer son rôle d'absorption acoustique,
- la température des deux faces du moule est maintenue constante, ce qui permet d'éviter toute répercussion défavorable sur le temps cycle,
- les températures mises en oeuvre, pour la fusion du liant ou le chauffage de la face chauffée, sont modérées, par exemple de l'ordre de 180°C, ce qui limite la consommation d'énergie.

Selon un deuxième aspect, l'invention propose un panneau réalisé par un tel procédé.

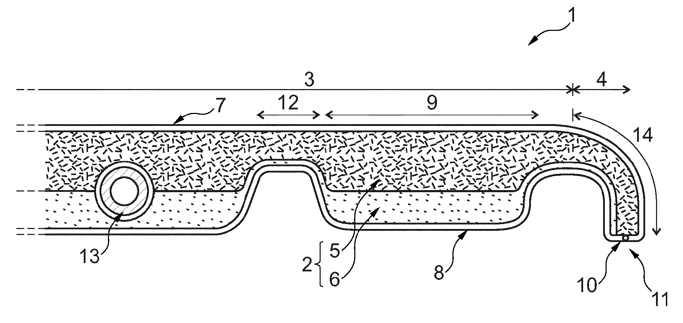

D'autres particularités et avantages de l'invention apparaîtront dans la description qui suit, faite en référence à la figure jointe qui est une vue schématique partielle en coupe d'un panneau selon une réalisation.

On décrit à présent un procédé de réalisation d'un panneau 1 d'habillage intérieur de véhicule automobile - par exemple sous forme de tablette de recouvrement d'un compartiment à bagages, de faux-plancher ou de panneau de protection acoustique pour un moteur -, ledit procédé comprenant les étapes suivantes :
- prévoir un moule définissant une cavité de moulage comprenant une face chauffée - par exemple à une température de l'ordre de 180°C - et une face refroidie - par exemple à une température de l'ordre de 30°C -,
- superposer dans ledit moule un multicouche comprenant successivement :
   o une couche de revêtement d'endroit 7 - notamment sous forme d'aiguilleté ou de tissu -, ladite couche étant tournée vers ladite face refroidie,
   o une couche structurelle 5 comprenant des fibres liées entre elles par un liant thermoplastique, ladite couche ayant été préalablement portée à température de fusion dudit liant,
   o une couche de mousse à base de polyuréthanne 6,
   o et une couche de revêtement d'envers 8 - notamment sous forme de non tissé -, ladite couche étant tournée vers ladite face chauffée,
de sorte que ledit multicouche présente une âme 2 comprenant ladite couche structurelle et ladite couche de mousse, ladite âme présentant une partie centrale 3 et une partie périphérique 4,
- mouler ledit multicouche en le comprimant entre lesdites faces, lesdites faces étant conformées de sorte que ledit multicouche soit fortement comprimée en ladite partie périphérique, la température de ladite face chauffée étant définie de sorte que ladite couche de mousse s'écrase, sous l'effet combiné de la pression appliquée et de la chaleur apportée par ladite face chauffée, pour présenter une épaisseur résiduelle stable après démoulage, ladite épaisseur étant inférieure ou égale à 0,5 mm - étant notamment inférieure ou égale à 0,2 mm -, de sorte que l'épaisseur de ladite âme en ladite partie périphérique après démoulage soit essentiellement constituée par l'épaisseur de ladite couche structurelle,
- réaliser une découpe périphérique, notamment concomitamment avec la compression, ladite découpe étant réalisée de sorte que lesdites couches de revêtement se rejoignent bord à bord selon une ligne de jonction 10, de manière à masquer la tranche 11 de ladite âme, lesdites couches de revêtement étant tranchées au raz de ladite tranche et de ladite ligne, de manière à obtenir ledit panneau.

Selon une réalisation, la couche de mousse 6 présente avant compression une densité comprise entre 0,012 et 0,018 - étant notamment de l'ordre de 0,015 - et une épaisseur comprise entre 10 et 20 mm.

Selon une réalisation particulière, on utilise une plaque de mousse semi-rigide thermo-formable de haute tortuosité, ce qui lui confère de très bonnes propriétés d'absorption acoustique.

Selon une réalisation, la couche structurelle 5 présente une masse surfacique comprise entre 1200 et 1800 g/m².

Selon une réalisation, la couche structurelle 5 présente en partie périphérique 4, après moulage, une épaisseur inférieure ou égale à 4 mm - étant notamment inférieure ou égale à 3 mm.

Selon la réalisation représentée, la partie centrale 3 comprend, après moulage, au moins une zone faiblement comprimée 9 d'absorption acoustique où la couche de mousse 6 présente une épaisseur supérieure ou égale à 6 mm - étant notamment comprise entre 15 et 30 mm.

Selon une réalisation, la couche structurelle 5 est à base de feutre de fibres naturelles - telles que des fibres de lin ou de coton - ou synthétiques - telles que des fibres de verre -, liées entre elles par le liant thermoplastique.

Dans ce cas, la couche structurelle 5 peut présenter en zone faiblement comprimée 9 une épaisseur supérieure ou égale à 4 mm, ladite épaisseur pouvant notamment aller jusqu'à 12 mm, de sorte que ladite couche structurelle puisse présenter des propriétés d'absorption acoustique liées à sa porosité.

Une telle épaisseur peut notamment être atteinte par l'utilisation d'une couche structurelle 5 de type « feutre gonflant ».

Un tel feutre est fortement compressé lors de sa fabrication, pendant une étape de laminage, de manière à mettre les fibres en contrainte au sein du liant.

Lors du chauffage du feutre à température de fusion du liant, les fibres reprennent leur forme à l'état non contraint et ledit feutre gonfle de façon importante, ce qui permet de disposer, sur le panneau 1, d'au moins une zone faiblement comprimée 9 dans laquelle la couche structurelle 5 présente une épaisseur telle que sus-décrite, qui permet de conférer à ladite couche structurelle, dans ladite zone, des propriétés d'absorption acoustique se cumulant à celles apportées par la couche de mousse 6.

Dans un tel feutre, la couche structurelle 5 présente notamment les caractéristiques suivantes :
- le liant thermoplastique est à base de polypropylène,
- le taux de fibres est compris entre 40 et 60 % en poids, et notamment entre 45 et 55 % en poids,
- les fibres ont une longueur minimale de 3 mm.

Selon une autre réalisation, la couche structurelle 5 est à base d'une matrice thermoplastique non poreuse, formant liant, chargée avec des fibres naturelles - telles que des fibres de lin, de coton ou de bois - ou synthétiques - telles que des fibres de verre.

Une telle matrice chargée peut être moulée par thermocompression comme dans le cas du feutre précédemment décrit.

Selon la réalisation représentée, la partie centrale 3 comprend, après moulage, au moins une zone de renfort 12 où la couche de mousse 6 est fortement comprimée, de manière à présenter une épaisseur résiduelle inférieure ou égale à 0,5 mm - étant notamment inférieure ou égale à 0,2 mm -, de sorte que l'épaisseur de l'âme 2 en ladite zone soit essentiellement constituée par l'épaisseur de la couche structurelle 5.

Selon une réalisation non représentée, le procédé prévoit en outre, après moulage, une étape de soudage d'un organe fonctionnel en matériau thermoplastique en envers d'une zone de renfort 12.

Un tel organe est par exemple - dans le cas d'un panneau 1 sous forme d'une tablette destinée à être posée sur une tôle de recouvrement du compartiment à bagages du véhicule - un pied d'appui ou un clip de fixation sur ladite tôle.

Selon la réalisation représentée, le procédé prévoit de disposer, avant moulage, un insert 13 de renfort, notamment métallique, entre la couche structurelle 5 et la couche de mousse 6.

Un tel insert 13 est notamment prévu dans le cas d'un panneau 1 sous forme d'une tablette de recouvrement d'un compartiment à bagages, ladite tablette n'étant pas destinée à être posée sur une tôle et devant présenter, de ce fait, une résistance importante à la flexion.

Selon une réalisation, la couche structurelle 5 comprend, lorsqu'elle est à base de feutre, des billes expansées.

La présence de telles billes permet d'obtenir une expansion accentuée de la couche structurelle 5, améliorant ses propriétés d'absorption acoustique.

On décrit enfin un panneau 1 d'habillage intérieur de véhicule automobile - par exemple sous forme de tablette de recouvrement d'un compartiment à bagages, de faux-plancher ou de panneau de protection acoustique pour un moteur - réalisé par le procédé sus-décrit, ledit panneau comprenant une âme 2 structurelle, ladite âme présentant une partie centrale 3 et une partie périphérique 4, ladite âme comprenant, juxtaposées l'une sur l'autre :
- une couche structurelle 5 thermo-comprimée comprenant des fibres liées entre elles par un liant thermoplastique,
- une couche de mousse 6 à base de polyuréthanne,
ledit panneau comprenant en outre :
- une couche de revêtement d'envers 8 - notamment sous forme d'aiguilleté - recouvrant ladite couche de mousse,
- une couche de revêtement d'endroit 7 - notamment sous forme de non tissé - recouvrant ladite couche structurelle,
ledit panneau présentant en outre les caractéristiques suivantes :
- ladite couche de mousse est fortement comprimée sur ladite partie périphérique, de manière à présenter une épaisseur résiduelle inférieure ou égale à 0,5 mm - étant notamment inférieure ou égale à 0,2 mm -, de sorte que l'épaisseur de ladite âme en ladite partie périphérique soit essentiellement constituée par l'épaisseur de ladite couche structurelle,
- lesdites couches de revêtement se rejoignent bord à bord selon une ligne de jonction 10, de manière à masquer la tranche 11 de ladite âme, lesdites couches de revêtement étant tranchées au raz de ladite tranche et de ladite ligne.

Selon une réalisation, la partie périphérique 4 présente une largeur développée 14 comprise entre 20 et 50 mm.

Selon une réalisation, la partie périphérique 4 s'étend sur toute la périphérie de l'âme 2.

## Revendications

1. Procédé de réalisation d'un panneau (1) d'habillage intérieur de véhicule automobile, ledit procédé comprenant les étapes suivantes :
• prévoir un moule définissant une cavité de moulage comprenant une face chauffée et une face refroidie,
• superposer dans ledit moule un multicouche comprenant successivement :
o une couche de revêtement d'endroit (7), ladite couche étant tournée vers ladite face refroidie,
o une couche structurelle (5) comprenant des fibres liées entre elles par un liant thermoplastique, ladite couche ayant été préalablement portée à température de fusion dudit liant,
o une couche de mousse à base de polyuréthanne (6),
o et une couche de revêtement d'envers (8), ladite couche étant tournée vers ladite face chauffée,
de sorte que ledit multicouche présente une âme (2) comprenant ladite couche structurelle et ladite couche de mousse, ladite âme présentant une partie centrale (3) et une partie périphérique (4),
• mouler ledit multicouche en le comprimant entre lesdites faces, lesdites faces étant conformées de sorte que ledit multicouche soit fortement comprimée en ladite partie périphérique, la température de ladite face chauffée étant définie de sorte que ladite couche de mousse s'écrase, sous l'effet combiné de la pression appliquée et de la chaleur apportée par ladite face chauffée, pour présenter une épaisseur résiduelle stable après démoulage, ladite épaisseur étant inférieure ou égale à 0,5 mm, de sorte que l'épaisseur de ladite âme en ladite partie périphérique après démoulage soit essentiellement constituée par l'épaisseur de ladite couche structurelle,
• réaliser une découpe périphérique, ladite découpe étant réalisée de sorte que lesdites couches de revêtement se rejoignent bord à bord selon une ligne de jonction (10), de manière à masquer la tranche (11) de ladite âme, lesdites couches de revêtement étant tranchées au raz de ladite tranche et de ladite ligne, de manière à obtenir ledit panneau.

2. Procédé selon la revendication 1, **caractérisé en ce que** la couche de mousse (6) présente avant compression une densité comprise entre 0,012 et 0,018 et une épaisseur comprise entre 10 et 20 mm.

3. Procédé selon l'une des revendications 1 ou 2, **caractérisé en ce que** la couche structurelle (5) présente une masse surfacique comprise entre 1200 et 1800 g/m².

4. Procédé selon l'une quelconque des revendications 1 à 3, **caractérisé en ce que** la couche structurelle (5) présente en partie périphérique (4), après moulage, une épaisseur inférieure ou égale à 4 mm.

5. Procédé selon l'une quelconque des revendications 1 à 4, **caractérisé en ce que** la partie centrale (3) comprend, après moulage, au moins une zone faiblement comprimée (9) d'absorption acoustique où la couche de mousse (6) présente une épaisseur supérieure ou égale à 6 mm.

6. Procédé selon l'une quelconque des revendications 1 à 5, **caractérisé en ce que** la couche structurelle (5) est à base de feutre de fibres naturelles ou synthétiques liées entre elles par le liant thermoplastique ou à base d'une matrice thermoplastique non poreuse, formant liant, chargée avec des fibres naturelles ou synthétiques.

7. Procédé selon l'une quelconque des revendications 1 à 6, **caractérisé en ce que** la partie centrale (3) comprend, après moulage, au moins une zone de renfort (12) où la couche de mousse (6) est fortement comprimée, de manière à présenter une épaisseur résiduelle inférieure ou égale à 0,5 mm, de sorte que l'épaisseur de l'âme (2) en ladite zone soit essentiellement constituée par l'épaisseur de la couche structurelle (5).

8. Procédé selon la revendication 7, **caractérisé en ce qu'**il prévoit en outre, après moulage, une étape de soudage d'un organe fonctionnel en matériau thermoplastique en envers d'une zone de renfort (12).

9. Procédé selon l'une quelconque des revendications 1 à 8, **caractérisé en ce qu'**il prévoit de disposer, avant moulage, un insert (13) de renfort, notamment métallique, entre la couche structurelle (5) et la couche de mousse (6).

10. Panneau (1) d'habillage intérieur de véhicule automobile réalisé par un procédé selon l'une quelconque des revendications 1 à 9, ledit panneau comprenant une âme (2) structurelle, ladite âme présentant une partie centrale (3) et une partie périphérique (4), ladite âme comprenant, juxtaposées l'une sur l'autre :
• une couche structurelle (5) thermo-comprimée comprenant des fibres liées entre elles par un liant thermoplastique,
• une couche de mousse (6) à base de polyuréthanne,
ledit panneau comprenant en outre :
• une couche de revêtement d'envers (8) recouvrant ladite couche de mousse,
• une couche de revêtement d'endroit (7) recouvrant ladite couche structurelle,
ledit panneau présentant en outre les caractéristiques suivantes :
• ladite couche de mousse est fortement comprimée sur ladite partie périphérique, de manière à présenter une épaisseur résiduelle inférieure ou égale à 0,5 mm, de sorte que l'épaisseur de ladite âme en ladite partie périphérique soit essentiellement constituée par l'épaisseur de ladite couche structurelle,
• lesdites couches de revêtement se rejoignent bord à bord selon une ligne de jonction (10), de manière à masquer la tranche (11) de ladite âme, lesdites couches de revêtement étant tranchées au raz de ladite tranche et de ladite ligne.
